# EUROPÄISCHE PATENTSCHRIFT

(11) **EP 1 314 676 B1**
(45) Veröffentlichungstag und Bekanntmachung des Hinweises auf die Patenterteilung: **16.01.2008**
(21) Anmeldenummer: 02025462.9
(22) Anmeldetag: 15.11.2002
(51) Int. Cl.: B66B 1/46

(54) **System zur Sicherheitskontrolle bei Beförderung von Personen mit einer Aufzugsanlage**
Security control system for transporting people with an elevator
Système de contrôle de sécurité pour le transport de personnes avec un ascenseur

(30) Priorität: 26.11.2001 EP 01811140
(43) Veröffentlichungstag der Anmeldung: 28.05.2003
(73) Patentinhaber: INVENTIO AG, 6052 Hergiswil (CH)
(72) Erfinder: Friedli, Paul, Dr.sc.tech., 5453 Remetschwil (CH)

(56) Entgegenhaltungen:
- EP-A- 0 832 839
- WO-A-01/25128
- US-A- 5 615 622
- PATENT ABSTRACTS OF JAPAN vol. 014, no. 206 (M-0967), 26. April 1990 (1990-04-26) & JP 02 043185 A (TOSHIBA CORP), 13. Februar 1990 (1990-02-13)

## Beschreibung

Die Erfindung bezieht sich auf ein System zur Sicherheitskontrolle bzw. Beförderung von Personen mit einer Aufzugsanlage, ein Verfahren zum Betreiben dieses Systems und ein Verfahren zum Nachrüsten einer Aufzugsanlage mit diesem System gemäss der Definition der Patentansprüche.

Systeme zur Sicherheitskontrolle von Personen sind bekannt. Beispielsweise kontrollieren solche Systeme den Zugang/Ausgang von Personen zu/von Gebäuden, Stockwerken, Räumen, usw.

Systeme zur Beförderung von Personen ermöglichen eine durch Identifikation gesteuerte Beförderung von Personen in Transportmitteln. So offenbart die Schrift EP-0699617 eine Einrichtung zur Ansteuerung einer Aufzugsanlage, bei der die Aufzugsanlage von einer Person durch einen Identifikations-Code angesteuert wird. Dabei erkennt eine Erkennungsvorrichtung den Identifikations-Code und leitet ihn als Steuersignal an eine Verarbeitungseinheit weiter. Die Verarbeitungseinheit liest das Steuersignal und ordnet ihm ein vordefiniertes, gewünschtes Fahrziel zu. Der Träger des Identifikations-Codes wird somit identifiziert und ihm wird ein Fahrziel zugeordnet. Die Verarbeitungseinheit übermittelt ein entsprechendes Steuersignal an die Aufzugsanlage, welche die Person dann selbsttätig an das Fahrziel befördert.

Nun hat sich als Nachteil herausgestellt, dass sich Unberechtigte des Identifikations-Codes bedienen können, um so Zugang zu Gebäuden, Stockwerken, Räumen, usw. zu erhalten und um sich von der Aufzugsanlage befördern lassen.

Aufgabe der Erfindung ist es, ein System zur Sicherheitskontrolle bzw. Beförderung von Personen mit einer Aufzugsanlage und ein Verfahren zum Betreiben dieses Systems bereitzustellen, wobei die Zuverlässigkeit der Identifizierung erhöht wird.

Diese Aufgabe wird durch die Erfindung gemäss der Definition der Patentansprüche gelöst.

Die Erfindung löst diese Aufgabe, in dem eine mit einer Aufzugsanlage zu befördernde Person nicht nur identifiziert wird, sondern in dem die Person auch authentifiziert wird. Identifizierung bedeutet, dass festgestellt wird, ob für einen Identifikations-Code eine Zutrittsberechtigung bzw. ein vordefiniertes Fahrziel exisitiert. Authentifizierung bedeutet, dass überprüft wird, ob die Person wirklich jene ist, als die sie sich ausgibt.

Erfindungsgemäss wird eine Person über mindestens einen Identifikations-Code identifiziert und über mindestens ein Authentifizierungs-Signal authentifiziert. Hierzu gibt die Person einen Identifizierungs-Code ein bzw. übermittelt und es wird von der Person ein Authentifizierungs-Signal erfasst. Dem Identifikations-Code sowie dem Authentifizierungs-Signal werden mindestens ein Benutzer-Profil zugeordnet. Eine im Benutzerprofil abgelegte Zutrittsberechtigung bzw. ein im Benutzerprofil vordefiniertes Fahrziel wird festgestellt. Das Authentifizierungs-Signal wird mit mindestens einer im Benutzerprofil abgelegten Referenz überprüft.

Bei Vorhandensein einer Zutrittsberechtigung zu einem Fahrziel und bei Übereinstimmung von Authentifizierungs-Signal und Referenz wird mindestens ein Steuersignal an die Aufzugsanlage übermittelt, um die Person an das Fahrziel zu befördern. Falls dies nicht zutrifft, wird mindestens ein Alarmsignal übermittelt, um die Person in der Aufzugskabine zu blockieren bzw. der Person den Zugang zur Aufzugsanlage zu verwehren.

Als Authentifizierungs-Signal wird ein biometrisches Signal verwendet. Vorteilhafterweise wird als Authentifizierungs-Signal ein Fingerabdruck und/oder eine Handgeometrie und/oder ein Gesichtsprofil und/oder ein Irismuster und/oder ein Netzhautscan und/oder ein Thermogramm und/oder ein Geruch und/oder ein Gewicht und/oder eine Stimme und/oder eine Unterschrift und/oder ein Tastenanschlag und/oder eine Gangsequenz verwendet.

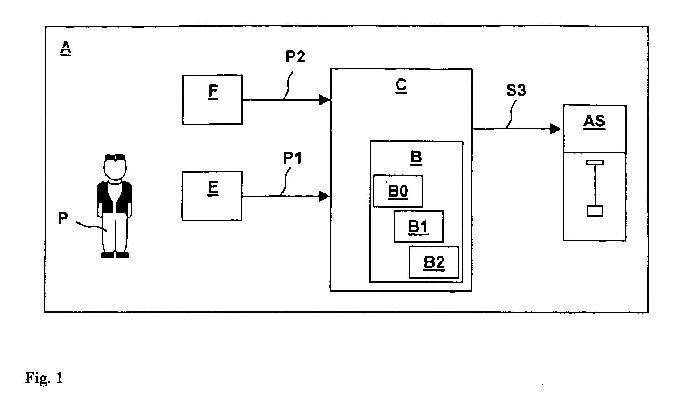

Nachstehend wird die Erfindung anhand einer Ausführungsform beispielhaft im Detail erläutert. Hierbei zeigt **Fig. 1** eine Prinzipdarstellung eines Systems zur Sicherheitskontrolle bzw. Beförderung von Personen.

In diesen Prinzipdarstellungen wird eine Person **P** mit einer Aufzugsanlage **A** befördert. Anstatt einer Person kann auch ein Gut befördert werden. Bei der Aufzugsanlage **A** kann es sich um eine beliebige, in einem Gebäude installierte Aufzugsanlage mit Aufzugskabine, Antrieb und Aufzugssteuerung **AS** handeln. Ein Antrieb und eine an einem Förderseil befestigte Aufzugskabine sind schematisch dargestellt. Alle bekannten und bewährten Aufzugsanlagen lassen sich verwenden.

Die Identifikation der Person **P** erfolgt über eine Erkennungsvorrichtung **E.** Vorzugsweise gibt die Person **P** mindestens einen Identifikations-Code **P1** ein, bspw. über eine Tastatur und/oder die Person **P** übermittelt einen Identifikations-Code **P1**, bspw. mit einen Transponder per Funk. Eine solche Erkennungsvorrichtung **E** ist vorteilhafterweise an einem Zugang zur Aufzugsanlage **A** montiert. Vorzugsweise handelt es sich bei der Erkennungsvorrichtung **E** um ein Terminal. Vorzugsweise ist ein solches Terminal nahe einer Stockwerktür der Aufzugsanlage **A** montiert.

Die Authentifizierung der Person **P** erfolgt über eine Authentifizierungsvorrichtung **F**. Vorzugsweise wird von der Person **P** mindestens ein Authentifizierungs-Signal **P2** erfasst. Die Erfassung eines Authentifizierungs-Signals erfolgt innerhalb, vorzugsweise nach dem Betreten der Aufzugskabine und/oder ausserhalb, vorzugsweise vor dem Betreten der Aufzugskabine. Bei Authentifizierung innerhalb der Aufzugskabine wird die Aufzugskabine als Schleuse verwendet, d.h. die Aufzugstür ist verschlossen und die Aufzugskabine wird nur bei positiver Authentifizierung verfahren. Bei Kenntnis der vorliegenden Erfindung kann der Fachmann natürlich Kombinationen dieser Ausführungsformen realisieren.

Folgende biometrische Verfahren der Authentifizierungen kommen bevorzugt zur Anwendung:

Fingerabdruck: Ein Fingerabdruck der Person **P** wird erfasst, bspw. gescannt. Vorzugsweise platziert die Person **P** den Finger auf einer Oberfläche der Authentifizierungsvorrichtung **F**, wo ein Fingerabdruck mit einer Kamera als Graustufenbild aufgenommen wird. Vorzugsweise wird die Graustufen binarisiert bzw. werden die Linienbreiten reduziert. Minuzien werden markiert.

Handgeometrie: Abmessungen einer Hand der Person **P** werden erfasst. Vorzugsweise platziert die Person **P** ihre Hand auf einer Oberfläche der Authentifizierungsvorrichtung **F**, wo mit einer Kamera eine dreidimensionale Silhouette der Hand aufgenommen wird. Vorzugsweise helfen Noppen bei der Positionierung der Hand.

Gesichtsprofil: Ein Gesichtsprofil der Person **P** lässt sich als dreidimensionales Modell bzw. als zweidimensionales Muster bzw. als Infrarot-Bild sowie als Kombination dieser Verfahren erfassen. Auch lassen sich Schwarzweiss-Bilder bzw. Farb-Bilder erfassen. Der Erfassungswinkel kann varieren, so lassen sich Profil-Bilder bzw. Frontal-Bilder bzw. allgemeine Perspektiven erfassen. Zeitlich gesehen lässt sich ein statisches Bild bzw. eine Bildsequenz erfassen. Die Person **P** wird vor der Authentifizierungsvorrichtung **F** platziert und von einer Kamera ein Gesichtsprofil aufgenommen.

Irisprofil: Eine Textur der Iris der Person **P** wird erfasst. Vorzugsweise steht die Person **P** in einigen Dezimetern Entfernung vor der Authentifizierungsvorrichtung **F** und blickt in eine Kamera, welche Kamera die Iristextur aufnimmt. Diese Aufnahme wird zu einem Iris-Code digitalisiert. Vorzugsweise wird die Iris in Ringbereiche unterteilt und charakteristische Merkmale werden markiert.

Netzhautscan: Eine Struktur der Venen der Netzhaut der Person **P** wird erfasst, bspw. gescannt. Vorzugsweise steht die Person **P** in einigen Dezimetern Entfernung vor der Authentifizierungsvorrichtung **F** und blickt in eine Kamera, welche Kamera die Struktur der Venen der Netzhaut aufnimmt. Vorzugsweise wird das Auge dazu mit Infrarot-Licht bestrahlt. Die photorezeptiven Strukturen des Auges reflektieren das Infrarot-Licht, welche Reflexion aufgenommen wird. Diese Aufnahme wird zu einem Netzhaut-Code digitalisiert und charakteristische Merkmale werden markiert.

Thermogramm: Wärmestrahlung der Person **P** wird erfasst. Vorzugsweise nimmt eine Wärme-Kamera der Authentifizierungsvorrichtung **F** ein Gesichts- bzw. Ganzkörperthermogramm auf.

Geruch: Ein Geruch der Person **P** wird von einem Geruchsensor der Authentifizierungsvorrichtung **F** erfasst.

Gewicht: Das Gewicht einer Person **P** wird von einer Waage der Authentifizierungsvorrichtung **F** erfasst.

Stimme: Stimmlage bzw. Stimmbruch bzw. Akzente bzw. Sprechfehler der Person **P** werden erfasst. Dazu spricht die Person **P** in ein Mikrophon der Authentifizierungsvorrichtung **F** und ein oder mehrere Phrasen werden aufgezeichnet.

Unterschrift: Eine Unterschrift der Person **P** wird erfasst, bspw. gescannt. Die Person **P** schreibt eine Unterschrift auf einer Oberfläche der Authentifizierungsvorrichtung **F**, welche Unterschrift mit einer Kamera aufgenommen wird. Vorzugsweise werden Schriftzüge bzw. Dynamik bzw. Geräusche der Unterschrifts-Zeichnung markiert bzw. ermittelt.

Tastenanschlag: Die Art und Weise, wie Tasten einer Tastatur von der Person **P** gedrückt werden wird erfasst. Vorzugsweise ermittelt die Authentifizierungsvorrichtung **F** mit Sensoren die Kraft bzw. Dynamik des Tastenanschlags.

Gangsequenz: Der Gang der Person **P** wird als Sequenz erfasst. Vorzugsweise wird der Gang der Person **P** von einer Kamera der Authentifizierungsvorrichtung **F** aufgenommen. Vorzugsweise wird aus mehreren Gangsequenzen eine personentypische Gangsequenz errechnet.

Mindestens ein Authentifizierungs-Signal **P2** wird vorteilhafterweise digitalisiert und in einem vorgängigen Verfahrensschritt als Referenz **B2** gespeichert. Das System weist mindestens eine Kontrollvorrichtung **C** auf, welche Kontrollvorrichtung **C** bspw. eine Recheneinheit mit Datenspeicher ist, in welchem Datenspeicher mindestens ein Benutzerprofil **B** der Person **P** gespeichert ist. Das Benutzerprofil **B** weist eine Zutrittsberechtigung **B0** zu einem Fahrziel bzw. ein vordefiniertes Fahrziel **B1** bzw. eine Referenz **B2** auf. Die Kontrollvorrichtung **C** kann ein zentraler Remote-Server sein, der per Funk bzw. Schur mit der Erkennungsvorrichtung **E,** der Authentifizierungsvorrichtung **F** und der Aufzugsanlage **A** kommuniziert.

Zur Sicherheitskontrolle bzw. Beförderung gibt die Person **P** einen Identifikations-Code **P1** an eine Erkennungsvorrichtung **E** ein bzw. übermittelt einen einen Identifikations-Code **P1** an eine Erkennungsvorrichtung **E.** Des weiteren erfasst eine Authentifizierungsvorrichtung **F** ein Authentifizierungs-Signal **P2** von der Person **P.** Dieser Identifikations-Code **P1** und dieses Authentifizierungs-Signal **P2** werden von der Erkennungsvorrichtung **E** respektive der Authentifizierungsvorrichtung **F** an die Kontrollvorrichtung **C** übermittelt.

Die Kontrollvorrichtung **C** prüft, ob für den Identifikations-Code **P1** ein Benutzerprofil **B** existiert. Bei positiver Identifikationsprüfung wird dieses Benutzerprofil **B** geöffnet.

Vorzugsweise liegen der Kontrollvorrichtung **C** Informationen über das Fahrziel der Person **P** vor. Die Kontrollvorrichtung **C** prüft nun, ob die Person **P** berechtigt ist, an dieses Fahrziel befördert zu werden. Hierzu vergleicht sie, ob das Fahrziel in der Zutrittsberechtigung **B0** aufgelistet ist.

Die Kontrollvorrichtung **C** prüft ferner, ob das Authentifizierungs-Signal **P2** mit der im Benutzerprofil **B** gespeicherten Referenz **B2** übereinstimmt. Hierzu werden bestimmte charakteristischen Merkmale von Authentifizierungs-Signal **P2**b und Referenz **P2** miteinander verglichen.

Bei positiver Authentizitätsprüfung übermittelt die Kontrollvorrichtung **C** mindestens ein Steuersignal **S3** an die Aufzugssteuerung **AS** der Aufzugsanlage **A**, um die Person **P** an das Fahrziel zu befördern. Bei negativer Authentizitätsprüfung übermittelt die Kontrollvorrichtung **C** mindestens ein Alarmsignal. Bei einer Authentifizierung innerhalb der Aufzugskabine wird bspw. die Aufzugstür geschlossen und blockiert und der Aufzug fährt nicht ab. Bei einer Authentifizierung ausserhalb der Aufzugskabine wird bspw. die Stockwerkstür zur Aufzugsanlage **A** nicht geöffnet. Auch lässt sich bei negativer Authentizitätsprüfung ein Sicherheitsdienst alarmieren.

Die Authentifizierungs-Signale **P2** sind mehr oder weniger eindeutig einer Person **P** zuordenbar bzw. die Akzeptanz auf Seiten der Benutzer, sich einer Authentifizierung zu unterziehen ist mehr oder weniger hoch. So ist das Irismuster sehr eindeutig einer Person **P** zuordenbar, die Akzeptanz einer Irismuster-Authentifizierung jedoch gering. So ist das Gewicht wenig eindeutig einer Person **P** zuordenbar, die Akzeptanz einer Gewichts-Authentifizierung jedoch hoch.

Bestimmte Authentifizierungs-Signale **P2** lassen sich nicht immer individuell ermitteln und sind nur für eine kleine Anzahl von zu authentifizierender Personen **P** relativ genau. Bspw. wird das Gewicht einer Person **P** mit einer Waage im Aufzugskabinenboden im Jahresdurchschnitt auf +/- 10% ermittelt. Weil die Person **P** aber oft mit anderen Personen **P** in der Aufzugskabine befördert wird - und das Gewicht der Person **P** somit indirekt als Gruppengewicht ermittelt wird - eignet sich das Gewicht als relativ genau bekanntes Authentifizierungs-Signal **P2** nur bei einer kleinen Anzahl von zu authentifizierender Personen **P**, bspw. bei Gruppen von bis zu fünf Personen **P**. Selbst wenn Genauigkeit der Gewichtsermittlung über eine Waage im Aufzugskabinenboden gering ist, lässt sich aus der Ermittlung des Gruppengewichtes doch die Anzahl der zu befördernden Personen **P** genau feststellen, d.h. ob es sich tatsächlich um drei Personen handelt, und nicht um zwei oder vier Personen.

In einer bevorzugten Ausführungsform werden von mindestens einer Person **P** mindestens zwei Authentifizierungs-Signale **P2** erfasst und ausgewertet. Gerade in Hochsicherheitssysteme - also in sicherheitssensiblen Gebäuden wie Banken, Militär, usw. - werden von einer Person **P** mehrere Authentifizierungs-Signale **P2** erfasst und ausgewertet. Bspw. wird ein Fingerabdruck und/oder ein Irismuster sowie das Gewicht der Person **P** erfasst. Die Eindeutigkeit der Authentifizierung wird dadurch stark erhöht.

Dieses Verfahren ist in bestehende Aufzugsanlagen **A** mit Erkennungsvorrichtung **E** nachrüstbar, indem eine Authentifizierungsvorrichtung **F** installiert wird. Die Komponenten der Authentifizierungsvorrichtung **F** sind kommerziell erhältlich und kostengünstig.

## Patentansprüche

1. Verfahren zur Sicherheitskontrolle bzw. Beförderung von Personen mit einer Aufzugsanlage **(A), dadurch gekennzeichnet, dass** eine Person (**P**) über mindestens einen Identifikations-Code **(P1)** identifiziert wird und dass die Person **(P)** über mindestens ein Authentifizierungs-Signal **(P2)** authentifiziert wird.

2. Verfahren gemäss Anspruch 1, **dadurch gekennzeichnet, dass** von der Person **(P)** ein Identifizierungs-Code **(P1)** eingegeben bzw. übermittelt wird, dass von der Person **(P)** ein Authentifizierungs-Signal **(P2)** erfasst wird, dass dem Identifikations-Code **(P1)** sowie dem Authentifizierungs-Signal **(P2)** mindestens ein Benutzer-Profil **(B)** zugeordnet werden, dass eine im Benutzerprofil **(B)** abgelegte Zutrittsberechtigung **(B0)** bzw. ein im Benutzerprofil **(B)** vordefiniertes Fahrziel **(B1)** festgestellt wird und dass das Authentifizierungs-Signal **(P2)** mit mindestens einer im Benutzerprofil **(B)** abgelegten Referenz **(B2)** überprüft wird.

3. Verfahren gemäss Anspruch 2, **dadurch gekennzeichnet, dass** bei Vorhandensein einer Zutrittsberechtigung **(B0)** zu einem Fahrziel und bei Übereinstimmung von Authentifizierungs-Signal **(P2)** und Referenz **(B2)** ein Steuersignal **(S3)** an eine Aufzugssteuerung **(AS)** übermittelt wird.

4. Verfahren gemäss einem der Ansprüche 1 bis 3, **dadurch gekennzeichnet, dass** als Authentifizierungs-Signal **(P2)** ein biometrisches Signal, vorteilhafterweise ein Fingerabdruck und/oder eine Handgeometrie und/oder ein Gesichtsprofil und/oder ein Irismuster und/oder ein Netzhautscan und/oder ein Thermogramm und/oder ein Geruch und/oder ein Gewicht und/oder eine Stimme und/oder eine Unterschrift und/oder ein Tastenanschlag und/oder eine Gangsequenz verwendet wird.

5. Verfahren gemäss einem der Ansprüche 1 bis 4, **dadurch gekennzeichnet, dass** die Person **(P)** über mindestens zwei Authentifizierungs-Signale **(P2)** authentifiziert wird.

6. System zur Sicherheitskontrolle bzw. Beförderung von Personen mit einer Aufzugsanlage (A), **dadurch gekennzeichnet, dass** eine Erkennungsvorrichtung **(E)** mindestens einen Identifikations-Code **(P1)** einer Person **(P)** erkennt und dass eine Authentifizierungsvorrichtung **(F)** mindestens ein Authentifizierungs-Signal **(P2)** der Person **(P)** erfasst.

7. System gemäss Anspruch 6, **dadurch gekennzeichnet, dass** mindestens eine Kontrollvorrichtung **(C)** mindestens ein Benutzerprofil **(B)** der Person **(P)** speichert und dass das Benutzerprofil **(B)** eine Zutrittsberechtigung **(B0)** zu einem Fahrziel bzw. ein vordefiniertes Fahrziel **(B1)** bzw. eine Referenz **(B2)** aufweist.

8. System gemäss Anspruch 7, **dadurch gekennzeichnet, dass** die Kontrollvorrichtung **(C)** prüft, ob für einen Identifikations-Code **(P1)** ein Benutzerprofil **(B)** existiert.

9. System gemäss Anspruch 7 oder 8, **dadurch gekennzeichnet, dass** die Kontrollvorrichtung **(C)** prüft, ob das Fahrziel der Person **(P)** in der Zutrittsberechtigung **(B0)** aufgelistet ist und/oder ob das Authentifizierungs-Signal **(P2)** mit der Referenz **(B2)** übereinstimmt.

10. Verfahren zum Nachrüsten einer Aufzugsanlage **(A)** mit einem System zur Sicherheitskontrolle bzw. Beförderung von Personen, **dadurch gekennzeichnet, dass** zusätzlich zu mindestens einer Erkennungsvorrichtung **(E)** mindestens eine Authentifizierungsvorrichtung **(F)** installiert wird.

## Claims

1. Method for security control and/or transportation of persons with an elevator installation **(A),**
**characterized in that**
a person **(P)** is identified from at least one identification code **(P1)** and that the person **(P)** is authenticated from at least one authentication signal (P2).

2. Method according to Claim 1,
**characterized in that**
an identification code **(P1)** is entered and/or transmitted by the person **(P),** that an authentication signal **(P2)** of the person **(P)** is captured, that at least one user profile **(B)** is assigned to the identification code **(P1)** and to the authentication signal **(P2),** that an access authorization **(B0)** stored in the user profile **(B)** and/or a pre-defined travel destination **(B1)** in the user profile **(B)** is/are determined, and that the authentication signal **(P2)** is checked against at least one reference **(B2)** stored in the user profile **(B)**.

3. Method according to Claim 2,
**characterized in that**
given the presence of an access authorization **(B0)** to a travel destination, and given correspondence of authentication signal **(P2)** and reference **(B2),** a control signal **(S3)** is transmitted to an elevator control **(AS).**

4. Method according to one of Claims 1 to 3,
**characterized in that**
as authentication signal **(P2)** a biometric signal, advantageously a fingerprint and/or a hand geometry and/or a facial profile and/or an iris pattern and/or a retinal scan and/or a thermogram and/or an odor and/or a weight and/or a voice and/or a signature and/or a keystroke and/or a walking sequence, is used.

5. Method according to one of Claims 1 to 4,
**characterized in that**
the person **(P)** is authenticated from at least two authentication signals **(P2)**.

6. System for security control and/or transportation of persons with an elevator installation **(A),**
**characterized in that**
a recognition device **(E)** recognizes at least one identification code **(P1)** of a person **(P),** and that an authentication device **(F)** captures at least one authentication signal **(P2)** of the person **(P)**.

7. System according to Claim 6,
**characterized in that**
at least one control device **(C)** stores at least one user profile **(B)** of the person **(P)**, and that the user profile **(B)** has an access authorization **(B0)** to a travel destination, and/or has a pre-defined travel destination **(B1),** and/or has a reference **(B2).**

8. System according to Claim 7,
**characterized in that**
the control device checks whether for an identification code **(P1)** a user profile **(B)** exists.

9. System according to Claim 7 or 8,
**characterized in that**
the control device **(C)** checks whether the travel destination of the person **(P)** is listed in the access authorization **(B0),** and/or whether the authentication signal **(P2)** corresponds with the reference **(B2).**

10. Method of retrofitting an elevator installation **(A)** with a system for security control and/or transportation of persons,
**characterized in that**
in addition to at least one recognition device **(E),** at least one authentication device **(F)** is installed.

## Revendications

1. Méthode de contrôle de sécurité et/ou de transport de personnes avec une installation d'ascenseur **(A)**, **caractérisée en ce qu'**une personne **(P)** est identifiée à travers au moins un code d'identification **(P1)** et que la personne **(P)** est authentifiée à travers au moins un signal d'authentification **(P2)**.

2. Méthode selon la revendication 1, **caractérisée en ce qu'**un code d'identification **(P1)** est introduit et/ou transmit par la personne **(P),** qu'un un signal d'authentification **(P2)** est saisi par la personne **(P)**, qu'au moins un profil utilisateur **(B)** est assigné au code d'identification **(P1)** ainsi qu'au signal d'authentification **(P2),** que une autorisation d'accès **(B0)** mémorisée dans le profil utilisateur **(B)** et/ou une destination **(B1)** prédéfinie dans le profil utilisateur **(B)** sont déterminées et que le signal d'authentification **(P2)** est vérifié avec au moins une référence **(B2)** mémorisée dans le profil utilisateur **(B)**.

3. Méthode selon la revendication 2, **caractérisée en ce que** en cas de présence d'une autorisation d'accès **(B0)** vers une destination et en cas de concordance du signal d'authentification **(P2)** et de la référence **(B2)** un signal de commande **(S3)** est transmit au système de manoeuvre d'ascenseur **(AS)**.

4. Méthode selon une des revendications de 1 à 3, **caractérisée en ce que** l'on utilise un signal biométrique comme signal d'authentification **(P2)**, de préférence une empreinte digitale et/ou une géométrie de main et/ou un profil de visage et/ou un dessin de l'iris et/ou un **scan rétinal** et/ou un thermogramme et/ou une odeur et/ou un poids et/ou une voix et/ou une signature et/ou une **frappe sur le clavier** et/ou une **séquence de démarche.**

5. Méthode selon une des revendications de 1 à 4, **caractérisée en ce que** la personne **(P)** est authentifiée par au moins deux signaux d'authentification **(P2).**

6. Système pour le contrôle de sécurité et/ou le transport de personnes avec une installation d'ascenseur **(A), caractérisée en ce qu'**un dispositif de reconnaissance **(E)** reconnaît au moins un code d'identification **(P1)** d'une personne **(P)** et qu'un dispositif d'authentification **(F)** saisit au moins un signal d'authentification **(P2)** de la personne **(P)**.

7. Système selon la revendication 6, **caractérisée en ce qu'**au moins un dispositif de contrôle **(C)** mémorise au moins un profil utilisateur **(B)** de la personne **(P)** et que le profil utilisateur **(B)** présente une autorisation d'accès **(B0)** à une destination et/ou une destination prédéfinie **(B1)** et/ou une référence **(B2)**.

8. Système selon la revendication 7, **caractérisée en ce que** le dispositif de contrôle **(C)** vérifie si un profil utilisateur **(B)** existe pour un code d'identification **(P1).**

9. Système selon la revendication 7 ou 8, **caractérisée en ce que** le dispositif de contrôle **(C)** vérifie si la destination de la personne **(P)** est listée dans l'autorisation d'accès **(B0)** et/ou si le signal d'authentification **(P2)** concorde avec la référence **(B2).**

10. Méthode pour rééquiper une installation d'ascenseur **(A)** avec un système pour le contrôle de sécurité et/ou le transport de personnes, **caractérisée en ce que** outre au moins un dispositif de reconnaissance **(E)**, au moins un dispositif d'authentification **(F)** est installé.
